# EUROPÄISCHE PATENTANMELDUNG

(11) **EP 4 817 856 A1**
(43) Veröffentlichungstag der Anmeldung: **07.10.2026**
(21) Anmeldenummer: 25167806.6
(22) Anmeldetag: 01.04.2025
(51) Int. Cl.: B29D 23/00, F16L 47/12, F16L 21/00, F16L 21/08, B29L 31/24

(54) **SCHERSTABPRESSE ZUM KONTROLLIERTEN EINTREIBEN VON SCHERSTÄBEN**

(71) Anmelder: Amiblu Technology AS, 3241 Sandefjord (NO)
(72) Erfinder: Plötner, Patrick Wolfram, 04720 Döbeln (DE); Lemke, Friedhelm, 04720 Döbeln (DE)
(74) Vertreter: Kaldewey, Tim Merlin

(57) **Zusammenfassung**

Die vorliegende Erfindung betrifft ein Scherstabgehäuse, ein Werkzeugset, ein System und sowie ein Verfahren zum sicheren und einfachen Einbringen von Scherstäben in Kupplungssysteme, insbesondere von Kupplungssystemen zum Verbinden von Rohrelementen.

Das Scherstabgehäuse (1) zum kontrollierten Einbringen eines Scherstabes (3) in Kupplungssysteme zum Verbinden von Rohrelementen (23), insbesondere von biaxialen Druckrohrsystemen, weist zumindest auf:

i) einen länglichen Scherstabführungsbereich (16) zur Aufnahme und Führung des Scherstabes (3) in dem Scherstabgehäuse (1),

ii) einen Scherstabgehäusekopf (26) zur gesicherten Überführung des Scherstabes (3) in eine Kupplungsnut (24),

iii) Befestigungsmittel (4) im Bereich des Scherstabgehäusekopfes (26) zum Fixieren des Scherstabgehäuses (1) in der Kupplungsnut (24),

iv) Führungsmittel (14) zur Führung eines Vortriebsblockes (2) innerhalb des Scherstabgehäuses (1) zwischen einem dem Scherstabgehäusekopf (26) abgewandtem Ende des Scherstabgehäuses (1) und dem Scherstabgehäusekopf (26),

v) Verbindungsmittel (18) zum Verbinden des Scherstabgehäuses (1) im Bereich des abgewandten Endes mit Vortriebsmitteln (5) zum Antreiben des Vortriebblockes (2).

## Beschreibung

Die vorliegende Erfindung betrifft ein Scherstabgehäuse, ein Werkzeugset, ein System und sowie ein Verfahren zum sicheren und einfachen Einbringen von Scherstäben in Kupplungssysteme, insbesondere von Kupplungssystemen zum Verbinden von Rohrelementen.

In den Bereichen wie der Wasserkraft, Bewässerung, Trinkwasserleitung, Abwasserleitung sowie in Industrieanlagen und beispielsweise LNG-Terminals (eng. liquefied natural gas) kommen großwandige Rohre zum Einsatz. Zur Bereitstellung einer Rohrleitung werden mehrere Rohr- oder Pipelineelemente miteinander verbunden. Häufig werden dazu Rohrkupplungssysteme verwendet. Insbesondere Druckrohrsysteme erfordern dabei sichere Verbindungen, welche sämtlichen zu erwartenden Kräften über einen längeren Zeitraum standhalten.

Dabei sind insbesondere glasfaserverstärkte Kunststoffrohre für die Anwendungen prädestiniert, da diese schnell installiert werden können und mit geringem Wartungsaufwand verbunden sind. Zudem besitzen solche Rohre hervorragende hydraulische Eigenschaften. Insoweit sind solche Druckrohre für die Anwendungsgebiete besonders geeignet. Häufig werden diese in Form von biaxialen Rohrsystem zur Verfügung gestellt, welche in Umfangsrichtung und Längsrichtung eine Verstärkung aufweisen und daher hervorragend für zum Beispiel Kühlwasserleitungen, Entsalzungsanlagen oder andere industrielle Anwendungen geeignet sind.

Um die hohen Zugkräfte aufnehmen zu können und den sicheren Betrieb zu gewährleisten sind einzelne Rohrelemente durch Kupplungssysteme miteinander verbunden. Dabei werden häufig längliche Kupplungselemente in eine in Umfangrichtung verlaufende Kupplungsnut eingetrieben. Diese Kupplungselemente sind häufig im Querschnitt rechteckig und werden in die passende Kupplungsnut so eingebracht, dass die einzelnen Rohrelemente miteinander mit über die Kupplung verbunden werden. Häufig weisen die Kupplungen für solche Rohre beidseitig eine Scherstabnut in der Kupplung für die beiden zu verbindenden Rohrelemente auf. Die sogenannten Scherstäbe sind häufig aus Kunststoff. Die Länge der Scherstäbe entspricht dabei häufig der Länge der Kupplungsnut, so dass bei dem Eintreiben immer größere Kräfte notwendig werden.

Zum Eintreiben der Scherstäbe in solche Kupplungssysteme zum Verbinden von Rohrelementen wird der Scherstab in die Kupplungsnut beziehungsweise die Scherstabnut der Kupplung eingesteckt und dann mit einem Hammer oder sonstigem Werkzeug von Hand eingetrieben. Bei dem Eintreibvorgang besteht ein hohes Verletzungsrisiko für Personen. Neben dem gefährlichen Umgang mit dem Hammer, besteht das Risiko, dass der lange Scherstab plötzlich ausschert oder bricht. Außerdem ist das Eintreiben von Hand sehr aufwendig und wird mit der steigenden Eindringtiefe immer kraftaufwendiger. Zudem kann eine kontrollierte oder bestimmte Kraft bei dem Eintreiben nicht sichergestellt werden. Insoweit ist das Eintreiben von Scherstäben kraftaufwendig und zeitintensiv, insbesondere für den Anwendungsfall zum Verbinden von großwandigen Rohrelementen. Zudem besteht erhebliche Verletzungsgefahr.

Es ist daher die Aufgabe der Erfindung, die im Stand der Technik aufgeführten Nachteile zumindest zum Teil zu beseitigen, insbesondere vollständig zu beseitigen.

Insbesondere ist es eine Aufgabe der Erfindung, verbesserte Hilfsmittel sowie ein Verfahren zum kontrollierten Einbringen eines Scherstabes in Kupplungssysteme zum Verbinden von Rohrelementen aufzuzeigen.

Ferner ist es Aufgabe der Erfindung das Einbringen sicherer zu gestalten und das Verletzungsrisiko zu minimieren. Ferner ist es Aufgabe der Erfindung ein schnelles und einfaches Eintreiben von Scherstäben zu ermöglichen. Ferner ist es eine Aufgabe der Erfindung sicherzustellen, dass kontrollierte Kräfte bei dem Eintreiben wirken.

Die vorliegende Aufgabe wird mit den Merkmalen der nebengeordneten Ansprüche gelöst. Vorteilhafte Weiterbildungen der Erfindung sind in den Unteransprüchen angegeben. In den Rahmen der Erfindung fallen auch sämtliche Kombinationen aus zumindest zwei in der Beschreibung, in den Ansprüchen und/oder den Zeichnungen angegebenen Merkmalen. Bei angegebenen Wertebereichen sollen auch innerhalb der genannten Grenzen liegende Werte als Grenzwerte offenbart gelten und in beliebiger Kombination beanspruchbar sein.

Demnach betrifft die Erfindung ein Scherstabgehäuse zum kontrollierten Einbringen eines Scherstabes in Kupplungssysteme zum Verbinden von Rohrelementen, insbesondere von biaxialen Druckrohrsystemen, zumindest aufweisend:
i) einen länglichen Scherstabführungsbereich zur Aufnahme und Führung des Scherstabes in dem Scherstabgehäuse,
ii) einen Scherstabgehäusekopf zur gesicherten Überführung des Scherstabes in eine Kupplungsnut,
iii) Befestigungsmittel im Bereich des Scherstabgehäusekopfes zum Fixieren des Scherstabgehäuses in der Kupplungsnut,
iv) Führungsmittel zur Führung eines Vortriebsblockes innerhalb des Scherstabgehäuses zwischen einem dem Scherstabgehäusekopf abgewandtem Ende des Scherstabgehäuses und dem Scherstabgehäusekopf,
v) Verbindungsmittel zum Verbinden des Scherstabgehäuses im Bereich des abgewandten Endes mit Vortriebsmitteln zum Antreiben des Vortriebblockes.

In anderen Worten wird ein Hilfsmittel zum sicheren und kontrollierten Führen eines Scherstabes in Richtung einer Öffnung einer Kupplungsnut beziehungsweise einer Scherstabnut eines Kupplungssystems offenbart, welches direkt an der Kupplungsnut befestigt beziehungsweise eingehängt werden kann und durch Anschluss an ein die Eintreibkraft bereitstellendes Vortriebsmittel einen Vortriebsblock und somit einen Scherstab in die Kupplungsnut einbringen kann.

Das Scherstabgehäuse ist ein im Wesentlichen längliches und an übliche Scherstabdimensionen angepasstes Gehäuse zur Aufnahme und Positionierung von Scherstäben. Dabei ist der Scherstab in dem Scherstabgehäuse in dem Scherstabführungsbereich positionierbar und anschließend in Richtung des Scherstabgehäusekopfes geführt bewegbar. Die Führungsmittel zum Führen des einsetzbaren Vortriebblockes geben dabei die Eintreibkraftrichtung zusammen mit einer Wand des Scherstabgehäuses vor. Dabei ist der Querschnitt des Scherstabführungsbereiches bevorzugt im Wesentlichen rechteckig ausgebildet, so dass übliche Scherstäbe durch den Vortriebsblock kontrolliert durch das Scherstabgehäuse leitbar sind und gleichzeitig der Scherstab von dem Scherstabgehäuse nach außen abgeschirmt wird, was die Sicherheit beim Eintreiben erhöht.

Bevorzugt weist der Scherstabgehäusekopf eine Schutzabdeckung beziehungsweise Schutzkappe auf, so dass die Öffnung der Kupplungsnut durch das Scherstabgehäuse zumindest teilweise verdeckt wird. Dies dient der Sicherheit bei dem Eintreibvorgang. Besonders bevorzugt ist die Schutzabdeckung so geformt, dass ein Anlegen an das runde Kupplungssystem einfach möglich ist, wobei gleichzeitig seitliche Begrenzungen durch die Schutzabdeckung bereitgestellt werden.

Das Scherstabgehäuse ist dabei bevorzugt aus Stahl, besonders bevorzugt aus verzinktem Stahl. Auf diese Weise kann das Scherstabgehäuse sicher verwendet werden, da es für die hohen Kräften beim Eintreiben nicht brechen, verbiegen oder auf sonstige Weise versagen darf.

Die Befestigungsmittel sind bevorzugt so ausgebildet, dass diese direkt in die die Öffnung der Kupplungsnut eingreifen beziehungsweise einhaken. Durch den Vortrieb beim Eintreiben wird dadurch die Gegenkraft im Bereich der Befestigungsmittel beziehungsweise von den Befestigungsmitteln aufgenommen, so dass vorteilhaft keine weitere kraftaufnehmende Fixierung des Scherstabgehäuses erforderlich ist. Die Befestigungsmittel sind dabei mit dem Scherstabgehäuse verbunden oder einteilig mit diesem ausgebildet.

Scherstäbe können in dem Scherstabgehäuse einfach positioniert und anschließend von den Vortriebsmitteln über den in den Führungsmitteln geführten Vortriebsblock in Richtung der Kupplungsnut vorgetrieben werden.

Die Vortriebsmittel sind dabei insbesondere elektrisch, pneumatisch oder hydraulisch betriebene Aktuatoren oder sonstige Krafteinbringungsmittel, die extern und nicht von Personen bereitgestellt werden.

Auf diese Weise kann das Scherstabgehäuse eine sichere, einfache und kontrollierbare Einbringung von Scherstäben in Kupplungssysteme ermöglichen. Vorteilhaft wird der Scherstab bei dem Eintreiben von dem Scherstabgehäuse aufgenommen und geführt, so dass die Verletzungsgefahr erheblich reduziert wird.

In einer bevorzugten Ausführungsform des Scherstabgehäuses ist vorgesehen, dass der Scherstab seitlich in den Scherstabführungsbereich des Scherstabgehäuse einschiebbar ist. In anderen Worten kann der Scherstab vorteilhaft mit der gesamten Scherstablänge seitlich und somit senkrecht zur Vortriebsrichtung in den Scherstabführungsbereich eingelegt werden. Dadurch wird Positionieren des Scherstabs parallel zur Kraftrichtung nicht notwendig und somit verhindert.

Eine seitliche Öffnung des Scherstabgehäuses zum Einschieben ist dabei bevorzugt mindestens so lang beziehungsweise groß, wie der einzutreibende Scherstab. Besonders bevorzugt ist diese nur wenige Zentimeter länger als der Scherstab, um ein einfaches Einschieben zu gewährleisten, jedoch ein nachträgliches Austreten des Scherstabes zu verhindern.

Auf diese Weise werden Personen bei der Verwendung des Scherstabgehäuses geschützt, da die Scherstäbe nur von der Seite einschiebbar sind. Ferner kann durch diese Konstruktion verhindert werden, dass ein weiterer Scherstab in den Scherstabführungsbereich gelangt, obwohl der einzutreibende Scherstab noch ganz oder teilweise in dem Scherstabführungsbereich angeordnet ist. Dies minimiert zusätzlich die Gefahr der Verletzung, da somit ein Verkeilen und ein ungewolltes Antreiben weiterer Scherstäbe unterbunden wird.

In einer bevorzugten Ausführungsform des Scherstabgehäuses ist vorgesehen, dass im Bereich des Scherstabgehäusekopfes das Scherstabgehäuse im Querschnitt geschlossen ausgebildet ist, so dass der Scherstab gezielt in Richtung der Kupplungsnut entlang des Scherstabführungsbereichs bewegbar ist. In anderen Worten wird das Scherstabgehäuse im Bereich des Scherstabgehäusekopfes senkrecht zur Vortriebsrichtung und somit in Umfangsrichtung geschlossen ausgebildet, so dass ein Scherstab nichtversehentlich bei dem Eintreiben aus dem Scherstabgehäuse gelangen kann und gezielt in Richtung der Kupplungsnut führbar ist.

Auf diese Weise kann der Scherstab vom Scherstabgehäuse nach dem Erreichen des Scherstabkopfes bei dem Eintreiben nicht mehr aus dem Scherstabgehäuse abtreiben oder herausspringen, da der Scherstab zumindest teilweise von der Wandung des Scherstabgehäuses im Bereich des Scherstabgehäusekopfes umschlossen ist. Auf diese Weise wird das Verletzungsrisiko weiter reduziert und ein kontrolliertes Einbringen des Scherstabes ermöglicht.

In einer bevorzugten Ausführungsform des Scherstabgehäuses ist vorgesehen, dass die Befestigungsmittel ein separates Bauteil zum Einhaken in die Kupplungsnut umfassen, bevorzugt in Form einer Kralle. Das separate Bauteil wird dabei besonders bevorzugt an dafür vorgesehene Öffnungen an dem Scherstabgehäuse fixiert. Ganz besonders bevorzugt ist das separate Bauteil neigbar beziehungsweise drehbar an dem Scherstabgehäuse fixiert. Dadurch wird ein Anpassen des Eintreibwinkels unabhängig von der genauen Position des Scherstabgehäuses ermöglicht. Zudem kann das separate Bauteil vorteilhaft ausgetauscht werden.

Dies birgt den besonderen Vorteil, dass das Scherstabgehäuse an verschieden dimensionierte Kupplungsnuten beziehungsweise den

Kupplungsnutenöffnungen angeschlossen werden kann. Es muss somit nur das separate Bauteil ausgetauscht werden. Die zur Fixierung vorgesehen Öffnungen im Scherstabgehäuse können dabei unterschiedliche Positionen im Bereich des Scherstabgehäusekopfes aufweisen.

Ganz besonders bevorzugt ist das separate Bauteil so breit, dass es passgenau in die Kupplungsnut eingreift, so dass eine sichere Fixierung ermöglicht und ein Wegrutschen bei dem Eintreiben verhindert wird.

In einer bevorzugten Ausführungsform des Scherstabgehäuses ist vorgesehen, dass die Führungsmittel durch eine in Eintreibrichtung beziehungsweise Führungsrichtung verlaufenden Nut ausgebildet sind. Diese ist bevorzugt in der Scherstabgehäusewand ausgebildet. Diese Nut kann nach außen oder innen ausgebildet sein. Die Nut oder der Vorsprung sind dabei zumindest im Bereich des Scherstabführungsausschnitts ausgebildet.

Ganz besonders bevorzugt ist eine nach außen gewölbte und dem benachbarten Scherstabgehäusewand in Führungsrichtung vorstehende Längserhebung, insbesondere im Querschnitt dreieckig oder in Form einer abgeflachten Pyramide. Ausgebildet. Auf diese Weise kann einfach und sicher eine Führung des Vortriebblockes und somit des Scherstabes erreicht werden.

In einer bevorzugten Ausführungsform des Scherstabgehäuses ist vorgesehen, dass die Verbindungsmittel durch eine Verbindungsplatte mit Öffnungen ausgebildet ist, welche senkrecht zur Vortriebsrichtung angeordnet ist und ein integraler Bestandteil des Scherstabgehäuses ist. In anderen Worten wird am unteren und dem Scherstabgehäusekopf abgewandtem Ende des Scherstabgehäuses zur direkten Verbindung mit den Vortriebsmitteln bereitgestellt. Auf diese Weise kann das Vortriebsmittel Kräfte vorteilhaft direkt in Vortriebsrichtung von der unteren Seite einbringen. Dazu weist die Verbindungsplatte bevorzugt eine weitere Öffnung zur Krafteinbringung auf den im Scherstabgehäuse anzuordnenden Vortriebsblock auf. Auf diese Weise werden sämtliche wirkenden Kräfte in Einbringungsrichtung bereitgestellt, so dass das Verletzungsrisiko verringert wird. Ferner können Kräfte einfach und in die gewünschte Richtung übertragen werden.

In einer bevorzugten Ausführungsform des Scherstabgehäuses ist vorgesehen, dass das Scherstabgehäuse zusätzlich ein Scherstabmagazine zur Aufnahme mindestens eines weiteren Scherstabes, vorzugsweise parallel zum Scherstabführungsbereich, aufweist, wobei Scherstäbe aus dem Scherstabmagazine in den Scherstabführungsbereich schiebbar sind. In anderen Worten weist das Scherstabgehäuse eine Vorkammer zum Laden der Scherstäbe auf, welche einfach und sicher seitlich in den Scherstabführungsbereich geschoben beziehungsweise gedrückt werden können. Das Scherstabmagazine ist dabei bevorzugt ebenfalls so lang wie die Öffnung zum seitlichen Einschieben der Scherstäbe. Die Scherstäbe werden dabei durch das Magazin sicher und in einer vorgegebenen Position zum direkten Einführen in den Scherstabführungsbereich bereitgestellt. Vorteilhaft ist ein direktes Einführen beziehungsweise Einschieben unmittelbar nach dem Eintreibvorgang möglich, so dass ein schnelles und effizientes Eintreiben mehrerer Scherstäbe ermöglicht wird. Zudem bietet das Scherstabmagazin den zusätzlichen Vorteil, dass nicht ausversehen in den Scherstabführungsbereich eingegriffen werden kann, so dass das Verletzungsrisiko weiter reduziert wird.

**In** einer bevorzugten Ausführungsform des Scherstabgehäuses ist vorgesehen, dass das Scherstabgehäuse im Bereich des dem Scherstabgehäusekopfes abgewandten Endes einen an den Scherstabführungsbereich anschließenden Vortriebsblockaufnahmebereich zur sicheren Aufnahme des Vortriebsblockes aufweist. **In** anderen Worten ist am unteren Ende des Scherstabführungsbereiches eine Kammer für den Vortriebsblock ausgebildet, so dass dieser insbesondere vollständig darin aufnehmbar ist. Auf diese Weise ist vorteilhaft weiterhin ein einfaches Einschieben der Scherstäbe in den Scherstabführungsbereich möglich. Ferner wird das Einführen eines weiteren Scherstabes vorteilhaft erst möglich, nachdem der Vortriebsblock in den Vortriebsblockaufnahmebereich zurückbewegt wurde.

**In** einer bevorzugten Ausführungsform des Scherstabgehäuses ist vorgesehen, dass das Scherstabgehäuse zumindest im Bereich des Scherstabführungsbereiches einen Unterbau zur strukturellen Verstärkung, vorzugsweise in Form eines U-Profiles, aufweist. Auf diese Weise können vorteilhaft die Kräfte axial zur Vortriebs- beziehungsweise Einbringungsrichtung entlang des Scherstabgehäuses aufgenommen werden und Verbindungsmittel flexibler konstruiert werden. Ferner wird zusätzlich ein spontanes Versagen vermieden.

Weiterhin betrifft die Erfindung ein Werkzeugset zum kontrollierten Einbringen eines Scherstabes in Kupplungssysteme zum Verbinden von Rohrelementen, zumindest aufweisend:
- das Scherstabgehäuse,
- einen in den Führungsmittelen des Scherstabgehäuse führbaren
Vortriebsblock, wobei der Vortriebsblock mit den Vortriebsmitteln in dem Scherstabgehäuse bewegbar ist.

In anderen Worten umfasst das Werkzeugset neben dem Scherstabgehäusen den passenden Vortriebsblock, welcher bevorzugt im Wesentlichen die gleiche Querschnittkontur wie der Scherstabführungsbereich und die darin zu führenden Scherstäbe auf.

Der Vortriebsblock weist auf einer dem Scherstabgehäusekopf zugewandten Seite einen bevorzugt eine flachen Anschlagsbereich auf. Durch das Drücken des Anschlagbereichs gegen einen in dem Scherstabführungsbereich angeordneten Scherstab, wir dieser kontrolliert und gleichmäßig angetrieben beziehungsweise entlang des Scherstabführungsbereiches bewegt.

Der Vortriebsblock ist insbesondere aus einem Material mit geringerem Härtegrad als das Scherstabgehäuse. Der Vortriebsblock ist bevorzugt aus Metall, besonders bevorzugt aus Messing.

Die Kombination aus einem Scherstabgehäuse aus Stahl und einem Messingblock als Vortriebsblock ist dabei besonders bevorzugt. Einerseits hat sich diese Materialkombination aus Stahl und Messing als besonders verschleißarm herausgestellt, andererseits kann durch den Messingblock der Scherstab besonders kontrolliert und schonend eingetrieben werden.

In einer bevorzugten Ausführungsform des Werkzeugsets ist vorgesehen, dass der Vortriebsblock ein zu den Führungsmitteln korrespondierendes Führungselement, vorzugsweise in Form einer in die Führungsnut des Scherstabgehäuses eingreifende Erhebung, zur verliersicheren Führung innerhalb des Scherstabführungsbereichs aufweist. In anderen Worten weist der Vortriebsblock eine Erhebung oder eine Nut passend zu den Führungsmitteln des Scherstabgehäuses zur Führung auf.

Durch diese Konstruktion kann der Vortriebsblock besonders sicher und kontrolliert in dem Scherstabgehäuse entlang der Vortriebsrichtung beziehungsweise Einbringungsrichtung bewegt werden.

In einer bevorzugten Ausführungsform des Werkzeugsets ist vorgesehen, dass der Vortriebsblock vollständig in dem Vortriebsblockaufnahmebereich einlassbar ist, so dass Scherstäbe nur seitlich in den Scherstabführungsbereich des Scherstabgehäuses einschiebbar sind, wenn der Vortriebsblock vollständig innerhalb des Vortriebsblockaufnahmebereiches angeordnet ist. Durch diese Konstruktion wird weiter die Betriebssicherheit erhöht und das Verletzungsrisiko minimiert.

In einer bevorzugten Ausführungsform des Werkzeugsets ist vorgesehen, dass der Vortriebsblock Verbindungsmittel zum Verbinden mit den Vortriebsmitteln, vorzugsweise in Form einer Gewindebohrung, aufweist. In anderen Worten ist Vortriebsblock zu einem direkten Anschluss an ein Kraftübertragungssystem, wie zum Beispiel einem Kolben eines Aktuators, ausgebildet. In einer besonders bevorzugten Ausführungsform wird die Verbindung geschraubt. Insoweit weist der Vortriebsblock entweder einen vorstehenden Gewindestab zum Einschrauben in ein Gewinde auf oder eine Gewindebohrung zum Aufschrauben des Vortriebblocks auf eine Gewindestange der Vortriebsmittel. Besonders bevorzugt weist der Vortriebsblock auf der dem Anschlagsbereich abgewandten und den Verbindungsmitteln zugewandten Seite eine Gewindebohrung zum Aufschrauben auf. Auf diese Weise kann der Vortriebsblock sicher mit den Vortriebsmitteln verbunden werden. Durch die Anordnung innerhalb des Scherstabgehäuses wird zudem durch die Führung der Vortriebsblock verdrehsicher in dem Scherstabgehäuse geführt, so dass bei dem Betrieb kein Lösen des Vortriebsblocks von den Vortriebsmitteln möglich ist.

Weiterhin betrifft die Erfindung ein System zum kontrollierten Eintreiben von Scherstäben in Kupplungssysteme zum Verbinden von Rohrelementen, zumindest aufweisend:
a) das Werkzeugset,
b) Vortriebsmittel zum Bewegen des Vortriebsblockes in dem Scherstabgehäuse, so dass ein in dem Scherstabführungsbereich eingelegter Scherstab in die Kupplungsnut eintreibbar ist.

Die Vortriebsmittel sind bevorzugt pneumatische oder hydraulische Antriebsmittel, wobei Kombinationen beider möglich sind. Bevorzugt wird ein hydraulisch basiertes Antriebsmittel. Der Vortriebsweg des Vortriebsmittels entspricht bevorzugt mindestens der Länge des Scherstabführungsbereichs und somit der Länge der einzutreibenden Scherstäbe. Die Vortriebsmittel können dabei den mit ihnen verbundenen Vortriebsblock vorteilhaft in Vortriebsrichtung und entgegen der Vortriebsrichtung bewegen. Auf diese Weise kann der Vortriebsblock vorteilhaft sicher in dem Scherstabgehäuse in Position gebracht werden. Der Vortriebsweg der Vortriebsmittel ist dabei vorzugsweise so ausgelegt, dass bei minimaler Auslenkung der Vortriebsblock vollständig in den Vortriebsblockaufnahmebereich angeordnet ist und bei maximaler Auslenkung im Bereich des Scherstabgehäusekopfes angeordnet ist.

Auf diese Weise sind die Positionen der Scherstäbe optimal vorgebbar, da die Vortriebsmittel genau auf das Scherstabgehäuse angepasst sind. Dabei entspricht der Abstand zwischen der maximalen Auslenkung und der minimalen Auslenkung vorzugsweise der Länge des Scherstabführungsbereiches sowie der einzutreibenden Scherstablänge. Auf diese Weise ist ein besonders sicheres Arbeiten mit dem System möglich.

In einer bevorzugten Ausführungsform des Systems ist vorgesehen, dass die Vortriebsmittel zumindest umfassen:
- einen an dem Scherstabgehäuse fixierbaren Hydraulikzylinder, wobei der Hydraulikzylinder mit dem Vortriebsblock verbindbar ist, und
- ein Hydraulikaggregat zum Betreiben des Hydraulikzylinders, wobei das Hydraulikaggregat vorzugsweise über flexible Schläuche mit dem Hydraulikzylinder verbunden ist.

In anderen Worten wird ein hydraulisch/pneumatisches Antriebsmittel an einen Hydraulikzylinder angeschlossen, wobei dieser fest mit dem Scherstabgehäuse verbunden wird. Der Vortriebsblock wird dabei bevorzugt auf eine Gewindestange des Hydraulikzylinders aufgeschraubt. Der Kolben des Hydraulikzylinders wird dabei ebenfalls innerhalb des Scherstabgehäuses zusammen mit dem Vortriebsblock bewegt. Durch die flexiblen Schläuche beziehungsweise Druckleitungen vom Hydraulikaggregat kann eine einfache und flexible Positionierung des Hydraulikaggregates und des mit dem mit dem Scherstabgehäuse verbundenen Hydraulikzylinders erfolgen.

In einer bevorzugten Ausführungsform des Systems ist vorgesehen, dass das Hydraulikaggregat Fortbewegungsmittel, vorzugsweise in Form von Rollen, aufweist, so dass das Hydraulikaggregat einfach bewegbar ist. Auf diese Weise ist das gesamte System damit vorteilhaft mobil. Die weiteren Komponenten des Systems sind zumindest tragbar, so dass ein flexibler und variabler Einsatz mit dem System möglich ist.

In einer bevorzugten Ausführungsform des Systems ist vorgesehen, dass die Vortriebsmittel ferner eine, vorzugsweise in dem Hydraulikaggregat integrierte, Steuereinheit zum kontrollierten Antreiben des Vortriebsblockes aufweisen. In anderen Worten wird ist ein Steuermodul zum kontrollierten Vortrieb beziehungsweise zum Betreiben des Hydraulikzylinders in das Hydraulikaggregat integriert.

Auf diese Weise können bevorzugte Eintreibwerte, wie zum Beispiel Vorschubkraft und Vorschubgeschwindigkeit eingestellt werden. Ferner wird die Sicherheit erhöht, da der Eintriebsvorgang insbesondere nur von der Steuereinheit aus initiierbar ist. Auf diese Weise kann vorteilhaft sichergestellt werden, dass sich die das System verwendende Person nicht verletzt und ein schnelles Eintreiben der Scherstäbe möglich ist.

In einer bevorzugten Ausführungsform des Systems ist vorgesehen, dass das System zusätzlich eine mit dem Hydraulikzylinder verbindbaren Ständer aufweist, so dass das in der Kupplungsnut fixierte und mit dem Hydraulikzylinder über die Verbindungsmittel verbundene Scherstabgehäuse vor dem Kupplungssystem in einer Eintreibposition haltbar ist. In anderen Worten wird der Ständer den Hydraulikzylinder so zusammen mit dem Scherstabgehäuse auf einer Achse halten, dass das System vorteilhaft zu der Kupplungsnut ausgerichtet werden kann. Besonders bevorzugt weist der Ständer beziehungsweise die Halterung einen Pin zur Lagerung des Hydraulikzylinders auf einer entsprechenden Öse auf. Der Ständer ist bevorzugt in horizontaler Richtung höhenverstellbar beziehungsweise teleskopierbar, so dass ein optimaler Eintreibwinkel einstellbar ist, insbesondere unabhängig von den in der Kupplungsnut angeordneten Befestigungsmitteln des Scherstabgehäuses.

In einer bevorzugten Ausführungsform des Systems ist vorgesehen, dass in einer Eintreibposition das Scherstabgehäuse tangential zu der Kupplungsnut des Kupplungssystems ausgerichtet ist. In anderen Worten wird das System so in der Eintreibposition ausgerichtet, dass das Eintreiben des Scherstabes tangential zur Kupplungsnut erfolgt. Auf diese Weise ist ein besonders einfaches und sicheres Eintreiben der Scherstäbe möglich.

In einer bevorzugten Ausführungsform des Systems ist vorgesehen, dass das System modifizierte Scherstäbe umfasst, wobei die modifizierten Scherstäbe bevorzugt eine der Länge des Scherstabführungsbereiches entsprechende Länge aufweisen. In anderen Worten werden mit dem System spezielle Scherstäbe mit einer bestimmten Länge bereitgestellt. Die Länge entspricht dabei vorzugsweise ebenfalls der Länge des Vortriebsweges. Auf diese Weise können lückenlos mehrere Scherstäbe hintereinander eingebracht werden. Zudem wird auf diese Weise die Betriebssicherheit weiter erhöht.

Die modifizierten Scherstäbe werden dabei ebenfalls als eigenständige Erfindung angesehen. Die einzelnen Scherstäbe sind dabei besonders bevorzugt deutlich kürzer als eine Gesamtlänge der Kupplungsnut oder ein Rohrelementdurchmesser beziehungsweise Kupplungsumfang. Auf diese Weise können besonders sicher und nacheinander mehrere Scherstäbe in die gleiche Kupplungsnut eingebracht werden. Zudem wird durch die modifizierten Scherstäbe ein schnelles und einfaches Eintreiben ermöglicht.

In einer bevorzugten Ausführungsform des Systems ist vorgesehen, dass die modifizierten Scherstäbe des Systems jeweils an einem Anfang und einem Ende frontseitig eine zentrale Scherstabbohrung ausweisen, so dass mehrere modifizierte Scherstäbe über Steckverbinder verbindbar sind. In anderen Worten weisen die modifizierten Scherstäbe jeweils auf den Kopfflächen mittig Öffnungen auf, in welche Steckverbinder gesteckt werden können.

Auf diese Weise können die einzelnen Scherstäbe in Längsrichtung jeweils miteinander bei dem Eintreiben verbunden werden, so dass die in der Kupplungsnut angeordneten und aneinander liegenden Scherstäbe zusätzlich über die Scherstäbe verbunden sind. Dies bewirkt eine sicherere Verbindung der Rohrelemente. Zudem können Scherstäbe über die Steckverbinder unmittelbar nach dem Einführen in das Scherstabgehäuse mit eine zuvor eingetriebenen Scherstab beziehungsweise dessen Ende über die jeweilige Scherstabbohrung vorfixiert werden. Der in dem Scherstabführungsbereich angeordnete Scherstab wird dabei sozusagen zwischen dem Vortriebsblock und dem bereits eingetriebenen Scherstab eingeklemmt beziehungsweise gehalten. Dabei unterstützt der Steckverbinder die Führung zusätzlich und ein Wegrutschen des Scherstabes beim Eintrieb wird verhindert.

Die modifizierten Scherstäbe weisen dabei die frontseitigen Bohrungen auf und sind vorzugsweise aus einem Kunststoff, besonders bevorzugt aus einem Thermoplast.

Weiterhin betrifft die Erfindung ein Verfahren zum Eintreiben von Scherstäben in Kupplungssysteme zum Verbinden von Rohrelementen, aufweisend zumindest die folgenden Schritte:
A) Bereitstellung eines Systems nach wenigstens einem der Ansprüche 8 bis 13 an der Kupplungsnut eines Kupplungssystems zum Verbinden von Rohrelementen, wobei das Scherstabgehäuse durch die Befestigungsmittel in der Kupplungsnut fixiert wird, und wobei der Vortriebsblock durch die Vortriebsmittel in dem Scherstabgehäuse angetrieben wird,
B) Positionierung mindestens eines Scherstabes in dem Scherstabführungsbereich des Scherstabgehäuses,
C) Eintreiben des Scherstabes in die Kupplungsnut durch Betreiben der Vortriebsmittel.

In anderen Worten wird in das Scherstabgehäuse ein Scherstab, bevorzugt ein modifizierter Scherstab eingelegt und durch die Antriebsmittel beziehungsweise den Vortriebsblock in Richtung der Kupplungsnut geführt und gedrückt, bis der Scherstab zum Großteil in die Kupplungsnut eingetrieben wurde. Anschließend kann ein weiterer Scherstab, insbesondere ein modifizierter und auf einer Seite mit einem in der dem Scherstabgehäusekopf zugewandten Scherstabbohrung bereitgestellten Steckverbinder eingetrieben werden, so dass die Scherstäbe nach und nach vollständig die Kupplungsnut ausfüllen. Ein Eintreiben von Hand ist somit vorteilhaft nicht notwendig. Das Verletzungsrisiko ist dabei gering und die wirkenden Kräfte können kontrolliert von den Antriebsmitteln bereitgestellt werden.

In einer bevorzugten Ausführungsform des Verfahrens ist vorgesehen, dass das Verfahren ferner den Schritt aufweist,

B2) Einstecken eines Steckverbinders in eine Scherstabbohrung eines modifizierten Scherstabes, so dass der Steckverbinder in eine Scherstabbohrung eines weiteren modifizierten Scherstabes bei dem Eintreiben in Schritt C) eingebracht wird, so dass der Scherstab und der weitere Scherstab über den Steckverbinder verbunden werden.

In anderen Worten werden nur modifizierte Scherstäbe in die Kupplung eingetrieben. Insoweit wird der erste modifizierte Scherstab ohne Steckverbinder eingebracht. Die folgenden modifizierten Scherstäbe, die in dieselbe Kupplungsnut eingebracht werden, weisen demnach auf der dem Scherstabgehäusekopf zugewandten Scherstabbohrung einen bevorzugt halb eingesteckten Steckverbinder auf. Die modifizierten Scherstäbe werden dabei besonders bevorzugt mit dem System zusammen bereitgestellt und stellen eine eigene Erfindung da. Es besteht auch die Möglichkeit, dass die übliche Scherstäbe vor Ort und unmittelbar vor dem Eintreiben zunächst auf eine gewünschte Länge, insbesondere auf Länge des Scherstabführungsbereichs des Scherstabgehäuses geschnitten beziehungsweise angepasst werden und anschließend mit der oberen und unteren Scherstabbohrung versehen werden. Die Steckverbinder können ebenfalls bereitgestellt und eingesteckt werden.

In einer bevorzugten Ausführungsform des Verfahrens ist vorgesehen, dass das Verfahren umfasst, dass mehrere modifizierte Scherstäbe nacheinander in dieselbe Kupplungsnut eingetrieben werden. Auf diese Weise wird eine sichere, einfache und lückenlose Eintreibung der Scherstäbe ermöglicht.

In einer bevorzugten Ausführungsform des Verfahrens ist vorgesehen, dass das Eintreiben in Schritt C) das Steuern eines Hydraulikzylinders zum kontrollierten Einbringen des Scherstabes umfasst. Das Steuern kann dabei auch indirekt durch die Steuerung eines entsprechenden Hydraulikaggregates erfolgen. Entscheidend ist, dass die Vortriebswerte eines Kolbens des Hydraulikzylinders kontrolliert gesteuert werden.

Weiterhin betrifft die Erfindung die Verwendung des Werkzeugsets nach zum Eintreiben von Scherstäben in Kupplungssystem zum Verbinden von Rohrelementen.

Die Kombination aus Scherstabgehäuse und dem Vortriebsblock ermöglichen dabei vorteilhaft ein verletzungsarmes und einfaches Eintreiben der Scherstäbe in die Kupplungsnut der Kupplungssysteme zum Verbinden von Rohrelementen. Ein Einschlagen von Hand ist daher nicht mehr notwendig. Zudem wir durch einzelne Ausführungsformen des Scherstabgehäuses die Sicherheit im Betrieb weiter erhöht.

Die zu den einzelnen Ausführungsformen genannten Merkmale sowie Vorteile sollen auch im Zusammenhang mit jeweils anderen Anspruchsgegenständen offenbart werden. Insoweit können in technisch sinnvoller Weise auch die einzelnen Merkmale kombiniert werden.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen schematisch in:
- Figur 1: eine Seitenansicht eines Scherstabgehäuses,
- Figur 2: eine Draufsicht auf das Scherstabgehäuse gemäß Figur 2,
- Figur 3: eine perspektivische Ansicht des Systems,
- Figur 4: eine Schnittdarstellung eines Vortriebblocks eines Werkzeugsets,
- Figur 5: modifizierte Scherstäbe mit eingesteckten Steckverbindern,
- Figur 6: eine perspektivische Ansicht einer Ausführungsform des Systems mit einem Rohrelement mit Kupplung,
- Figur 7: eine Explosionszeichnung des Systems gemäß Figur 6.

In den Figuren sind gleiche Bauteile oder Bauteile mit der gleichen Funktion mit den gleichen Bezugszeichen gekennzeichnet. Alle Skizzen können zu Darstellungszwecken überzogen gezeichnet sein, somit müssen die Figuren nicht die Proportionen der tatsächlichen Ausführungsformen aufweisen.

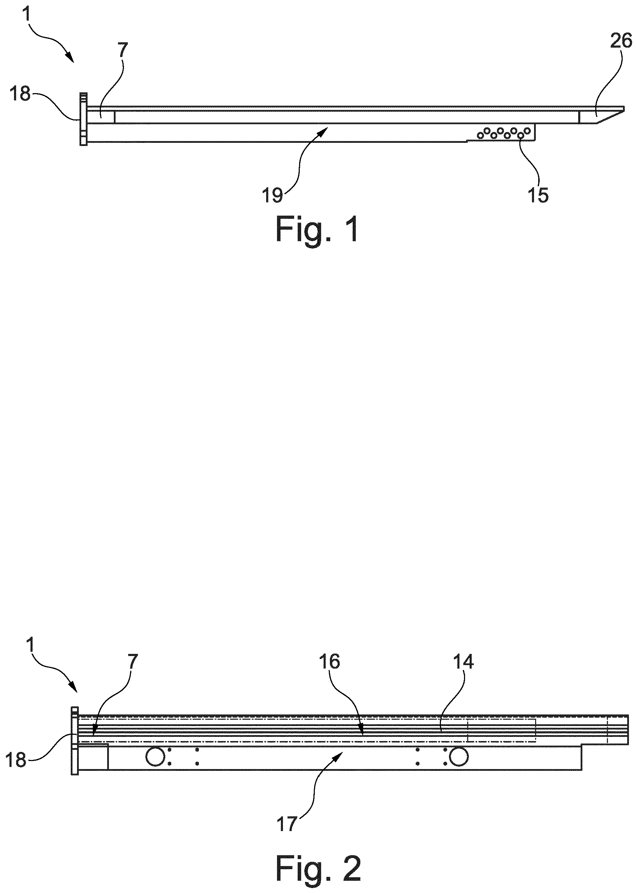

In Figur 1 wird das Scherstabgehäuse 1 in einer seitlichen Darstellung abgebildet. Das Scherstabgehäuse 1 weist dabei einen

Vortriebsblockaufnahmebereich 7 zur Aufnahme eines Vortriebblocks 2 auf. Auf der dem Scherstabgehäusekopf 26 abgewandten Seite weist das Scherstabgehäuse 1 Verbindungsmittel in Form einer Verbindungsplatte auf. Diese umfasst durchgehende Bohrungen, so dass Vortriebsmittel 5 mit dem Scherstabgehäuse 1 verbunden werden können.

Im Bereich des Unterbaus 19 beziehungsweise des U-Profils 19 weist das Scherstabgehäuse 1 mehrere beidseitige und durchgehende Bohrungen beziehungsweise Ausnehmungen 15 zum Verbinden mit einem Befestigungsmittel 4 auf. Die Befestigungsmittel 4, insbesondere eine Kralle, können daher vorteilhaft um die Achse zwischen zwei gegenüberliegenden geneigt oder gekippt werden.

Im Bereich des Scherstabgehäusekopfes ist zudem eine Schutzhaube 26 beziehungsweise Schutzabdeckung 26 ausgebildet, welche durch die dreieckige Form einfach nah an eine Kupplungsnut 26 beziehungsweise ein Kupplungssystem bringbar ist. Zudem bietet die Schutzhaube 26 einen zusätzlichen Schutz im Betrieb, da an der Scherstabgehäusefront der Scherstab 3 nicht herausspringen kann und die Kupplungsnut 26 von der Schutzhaube 26 abgeschirmt wird.

Das Scherstabgehäuse 1 gemäß Figur 2 zeigt als Draufsicht das Scherstabmagazine 17. Ein in dieses Scherstabmagazine 17 eingelegter Scherstab 3 kann dabei einfach in den Scherstabführungsbereich 16 überführt werden, insbesondere durch ein einfaches Schieben, da beide Bereiche bevorzugt unmittelbar aneinander anschließen und ein Boden des Scherstabmagazins 17 und des Scherstabführungsbereiches 16, auf welchem die Scherstäbe 3 aufliegen, in einer Ebene liegen. Ein versehentliches Einklemmen beim Betrieb wird somit zusätzlich durch das Scherstabmagazin 17verhindert.

Ferner ist der Scherstabführungsbereich 16 zwischen der Verbindungsplatte 18 beziehungsweise dem Vortriebsblockaufnahmebereich 7 und dem Scherstabgehäusekopf 26 ausgebildet. Ein in dem Scherstabführungsbereich 16 angeordneter Scherstab 3 wird somit seitlich sowie oben und unten durch das Scherstabgehäuse 1 zusätzlich begrenzt beziehungsweise abgeschirmt. Die Führungsnut 14 beziehungsweise die Führungsmittel 14 der dargestellte Ausführungsform zum Führen des Vortreibblocks 2 erstreckt sich über das gesamte Scherstabgehäuse 1. Auf diese Weise wird ein Herausfallen des Vortriebblocks 2 verhindert und die Führung über die gesamte Scherstabgehäuselänge sichergestellt.

Zusätzlich ist in der Figur 2 erkennbar, dass wenn in dem Vortriebsblockaufnahmebereich 7 ein Vortriebsblock 2 angeordnet ist, ein Scherstab 3 direkt aus dem Scherstabmagazine 17 an den Vortriebsblock schiebbar ist. Zudem ist erkennbar, dass kein Einführen eines Scherstabes 3 möglich ist, sollte der Vortriebsblock 2 nicht vollständig in dem Vortriebsblockaufnahmebereich 17 zurückgeführt sein.

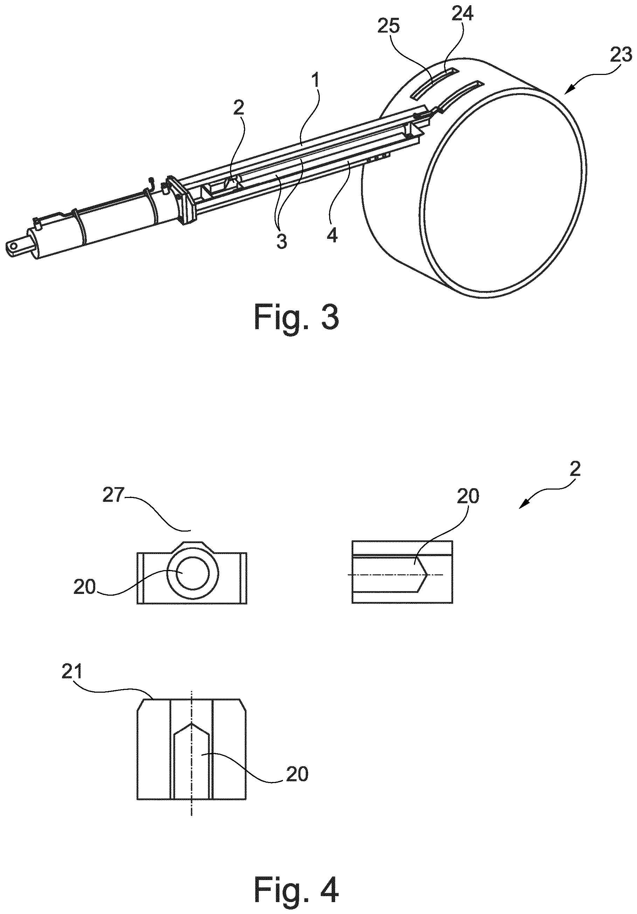

In Figur 3 wird das System aus Scherstabgehäuse 1 mit Vortriebsblock 2 und einem Antriebsmittel 5 in Form eines an die Verbindungsplatte 18 angeschlossenen Hydraulikzylinders 6 dargestellt. Das Rohr mit Kupplung 23 weist dabei die Kupplungsnut 24 mit einer bestimmten Kupplungsnutbreite 25 auf.

Die Befestigungsmittel 4 in Form einer Kralle 4 greifen dabei einfach und passgenau in die Kupplungsnut 24 ein. Dabei liegt die Kralle 4 seitlich durch die Kupplung begrenzt in der Kupplungsnut 24, da eine Breite der Kralle der Kupplungsnutbreite 25 entspricht. Die Kralle 4 ist dabei in den Ausnehmungen 15 des Scherstabgehäuses 1 neigbar gelagert beziehungsweise durch einen Bolzen zwischen zwei gegenüberliegenden Ausnehmungen 15 befestigt.

Der eingelegte Scherstab 3 wird von dem Vortriebsblock 2 vorgetrieben. Ein weiterer Scherstab 3 liegt in dem Scherstabmagazin 17 zur späteren Überführung in den Scherstabführungsbereich 16 bereit.

In Figur 4 werden drei Schnittansichten des Vortriebblocks 2 abgebildet. Der Vortriebsblock 2 weist dabei ein Führungselement 27 beziehungsweise eine Erhebung 27 auf, welche mit der Führungsnut 14 des Scherstabgehäuses korrespondierend ausgebildet ist. Der Vortriebsblock 2 kann als Messingblock 2 ausgebildet sein.

Der Vortriebsblock 2 weist auf der dem Scherstab 3 zugewandten Seite einen flach ausgebildeten Anschlagsbereich 21 auf, welcher im Betrieb gegen die untere Seite des Scherstabes 3 drückt und diesen vortreibt. Auf der dem Scherstab 3 abgewandten und der Verbindungsplatte 18 zugewandten Seite, weist der Vortriebsblock 2 eine Bohrung 20 mit Gewinde auf, so dass der Vortriebsblock 2 direkt auf die Vortriebsmittel aufschraubbar beziehungsweise mit diesen verbindbar ist. In dem Scherstabgehäuse 1 kann ein Abdrehen des Vortriebblocks 2 im Betrieb nicht erfolgen, da dieser von dem Scherstabgehäuse 1 und insbesondere von der Führungsnut 14 geführt wird.

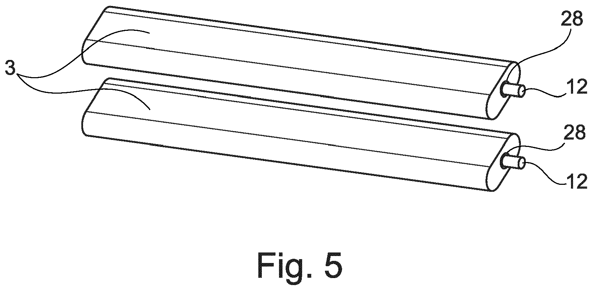

In Figur 5 werden zwei modifizierte Scherstäbe 3 dargestellt, welche auf beiden Frontendflächen jeweils eine Scherstabbohrung 28 zum Einstecken von Steckverbindern 2aufweisen. Die Scherstabe 3 können daher miteinander über die Steckverbinder 12 verbunden und im Betrieb zusätzlich geführt werden.

Ferner sind die Scherstäbe 3 so lang, dass diese vollständig in dem Scherstabgehäuse 1 aufnehmbar und in dem Scherstabführungsbereich 16 führbar sind. Zudem entspricht die Länge der Scherstäbe 3 der seitlichen Öffnung im Scherstabgehäuse 2 zum Einschieben der Scherstäbe 3 in den Scherstabführungsbereich 16.

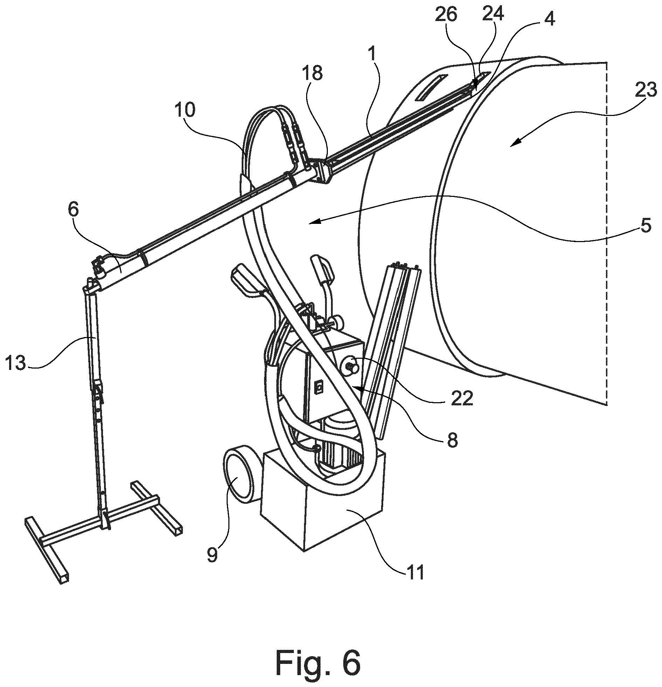

In Figur 6 wird das System in einer Ausführungsform mit Ständer 13, Hydraulikzylinder 6 und Hydraulikaggregat 8 an der Kupplung mit Rohrelement 23 dargestellt. Das Hydraulikaggregat 8 ist dabei mittels Druckleitungen 10 beziehungsweise Schläuche 10 mit dem Hydraulikzylinder 6 verbunden. Der den Vortriebsblock 2 antreibende Hydraulikzylinder 6 ist mit dem Vortriebsblock 2 direkt verbunden.

Das Hydraulikaggregat weist dabei Fortbewegungsmittel 9 in Form von Rollen auf. Die Schiebevorrichtung 9 ermöglicht vorteilhaft den örtlich flexiblen einfachen Einsatz des Systems. Das Hydraulikaggregat 8 weist ferner ein Hydraulikaggregatgehäuse 11 auf, welches neben dem Schutz des Aggregates auch den Schutz für damit arbeitende Personen sicherstellt.

Es liegen mehrere modifizierte Scherstäbe 3 zum Eintreiben in die Kupplungsnut 24 des Kupplungssystems des Rohrs 23 auf. Der Ständer 13 beziehungsweise Halter 13 ist dabei mit dem Hydraulikzylinder 6 verbunden und bringt diesen parallel mit dem Scherstabgehäuse 1 in die Eintreibposition, in welcher die Scherstäbe 3 tangential auf die Kupplungsnut 24 treffen, um ein kontrolliertes und sicheres Eintreiben zu gewährleisten.

Ferner weist das Hydraulikaggregat 8 Steuermittel 22 zum kontrollierten Vortrieb des Vortreibblock 2 beziehungsweise der Scherstäbe 3 in dem Scherstabgehäuse 1 auf. Die Steuermittel 22 können auch separat bereitgestellt werden, sind jedoch aus Sicherheitsgründen bevorzugt an dem Hydraulikaggregat 8 befestigt. Entscheidend ist, dass die Einschubwerte hinsichtlich Kraft und Geschwindigkeit einstellbar beziehungsweise steuerbar sind. Die Steuereinheit 22 kann auch kabellos oder per Kabel mit dem Hydraulikaggregat verbunden sein.

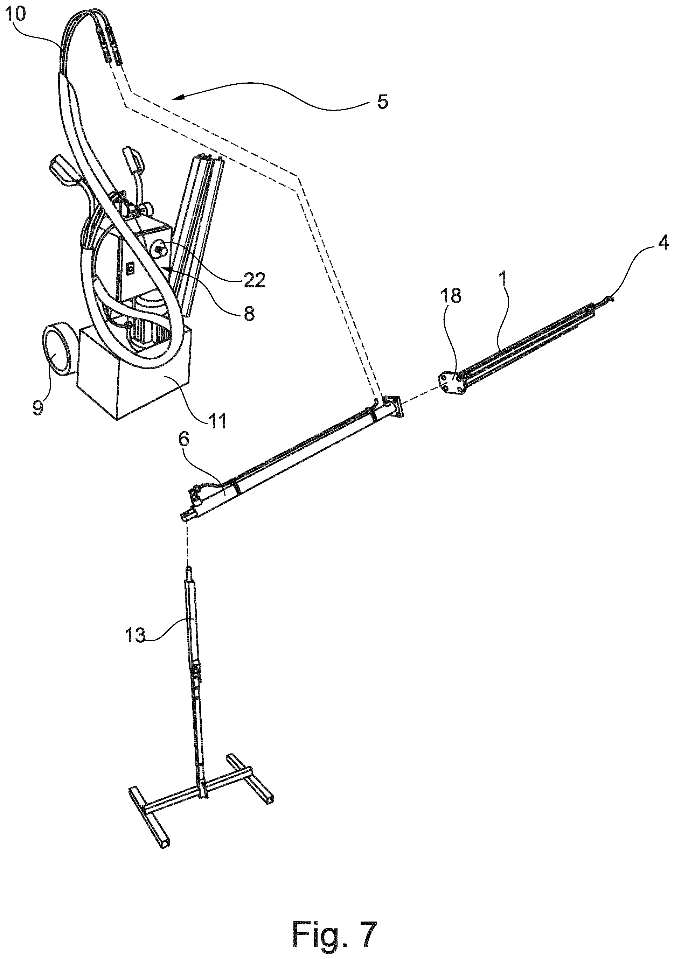

In Figur 7 werden die Komponenten des Systems gemäß Figur 6 in Form einer Explosionszeichnung dargestellt. Es ist erkennbar, dass das System für den Eintrieb von Scherstäben in großwandige Rohre beziehungsweise Kupplungen von Druckrohrelementen prädestiniert ist.

Die Figur zeigt, dass die Vorrichtung in einzelnen Teilen tragbar beziehungsweise bewegbar ist. Somit ist das gesamte System vorteilhaft mobil und kann flexible eingesetzt werden.

Bevorzugt wird das System mit den modifizierten und angepassten Scherstäben 3 bereitgestellt, um einen optimalen Ablauf zu gewährleisten. Ferner können die zugeschnittenen und mit Scherstabbohrungen 28 versehenen Scherstäbe 3 auch unabhängig von dem System, sondern nur mit dem Werkzeugset aus Scherstabgehäuse 1 und Vortriebsblock 2 bereitgestellt werden. Die Scherstäbe 3 sowie der Vortriebsblock 2 sind dann auch das Scherstabgehäuse 1 angepasst, wie zuvor beschrieben.

### Bezugszeichenliste

- 1: Scherstabgehäuse
- 2: Vortriebblock, Messingblock
- 3: Scherstab
- 4: Befestigungsmittel, Nuteingriffsmittel, Kralle
- 5: Vortriebsmittel, Antriebsmittel
- 6: Hydraulikzylinder
- 7: Vortriebsblockaufnahmebereich
- 8: Hydraulikaggregat
- 9: Fortbewegungsmittel, Sackkarre
- 10: Schläuche, Druckleitung
- 11: Hydraulikaggregatgehäuse
- 12: Steckverbinder
- 13: Halterung, Ständer
- 14: Führungsmittel, Führungsnut des Scherstabgehäuses
- 15: Bohrung Scherstabgehäuse für Befestigungsmittel, Ausnehmungen
- 16: Scherstabführungsbereich
- 17: Scherstabmagazine
- 18: Verbindungsmittel, Verbindungsplatte des Scherstabgehäuses
- 19: U-Profil, Unterbau des Scherstabgehäuses
- 20: Verbindungsmittel des Vortriebblock, Bohrung mit Gewinde
- 21: Anschlagsbereich des Vortriebblocks
- 22: Steuermittel für Vortrieb
- 23: Rohr mit Kupplung
- 24: Kupplungsnut, Scherstabnut in der Kupplung
- 25: Kupplungsnutbreite
- 26: Scherstabgehäusekopf, Schutzhaube
- 27: Führungselement des Vortriebblocks, Erhebung
- 28: Scherstabbohrung

## Patentansprüche

1. Scherstabgehäuse (1) zum kontrollierten Einbringen eines Scherstabes (3) in Kupplungssysteme zum Verbinden von Rohrelementen (23), insbesondere von biaxialen Druckrohrsystemen, zumindest aufweisend:
i) einen länglichen Scherstabführungsbereich (16) zur Aufnahme und Führung des Scherstabes (3) in dem Scherstabgehäuse (1),
ii) einen Scherstabgehäusekopf (26) zur gesicherten Überführung des Scherstabes (3) in eine Kupplungsnut (24),
iii) Befestigungsmittel (4) im Bereich des Scherstabgehäusekopfes (26) zum Fixieren des Scherstabgehäuses (1) in der Kupplungsnut (24),
iv) Führungsmittel (14) zur Führung eines Vortriebsblockes (2) innerhalb des Scherstabgehäuses (1) zwischen einem dem Scherstabgehäusekopf (26) abgewandtem Ende des Scherstabgehäuses (1) und dem Scherstabgehäusekopf (26),
v) Verbindungsmittel (18) zum Verbinden des Scherstabgehäuses (1) im Bereich des abgewandten Endes mit Vortriebsmitteln (5) zum Antreiben des Vortriebblockes (2).

2. Scherstabgehäuse (1) nach Anspruch 1, wobei der Scherstab (3) seitlich in den Scherstabführungsbereich (16) des Scherstabgehäuse (1) einschiebbar ist.

3. Scherstabgehäuse (1) nach wenigstens einem der vorhergehenden Ansprüche, wobei im Bereich des Scherstabgehäusekopfes (26) das Scherstabgehäuse (1) in Querschnitt geschlossen ausgebildet ist, so dass der Scherstab (3) gezielt in Richtung der Kupplungsnut (26) entlang des Scherstabführungsbereichs (26) bewegbar ist.

4. Scherstabgehäuse (1) nach wenigstens einem der vorhergehenden Ansprüche, wobei das Scherstabgehäuse (1) zusätzlich ein Scherstabmagazine (17) zur Aufnahme mindestens eines weiteren Scherstabes (3), vorzugsweise parallel zum Scherstabführungsbereich (16), aufweist, wobei Scherstäbe (3) aus dem Scherstabmagazine (17) in den Scherstabführungsbereich (16) schiebbar sind.

5. Scherstabgehäuse (1) nach wenigstens einem der vorhergehenden Ansprüche, wobei das Scherstabgehäuse (1) im Bereich des dem Scherstabgehäusekopfes (26) abgewandten Endes einen an den Scherstabführungsbereich (16) anschließenden Vortriebsblockaufnahmebereich (7) zur sicheren Aufnahme des Vortriebsblockes (2) aufweist.

6. Werkzeugset zum kontrollierten Einbringen eines Scherstabes (3) in Kupplungssysteme zum Verbinden von Rohrelementen (23), zumindest aufweisend:
- ein Scherstabgehäuse (1) nach wenigstens einem der vorhergehenden Ansprüche,
- einen in den Führungsmittelen (14) des Scherstabgehäuse (1) führbaren Vortriebsblock (2), wobei der Vortriebsblock (2) mit Vortriebsmitteln (5) in dem Scherstabgehäuse (1) bewegbar ist.

7. Werkzeugset nach Anspruch 6, wobei der Vortriebsblock (2) vollständig in dem Vortriebsblockaufnahmebereich (7) einlassbar ist, so dass Scherstäbe (3) nur seitlich in den Scherstabführungsbereich (16) des Scherstabgehäuses (1) einschiebbar sind, wenn der Vortriebsblock (2) vollständig innerhalb des Vortriebsblockaufnahmebereiches (7) angeordnet ist.

8. System zum kontrollierten Eintreiben von Scherstäben (3) in Kupplungssysteme zum Verbinden von Rohrelementen (23), zumindest aufweisend:
a) ein Werkzeugset nach wenigstes einem der Ansprüche 6 oder 7,
b) Vortriebsmittel (5) zum Bewegen des Vortriebsblockes (2) in dem Scherstabgehäuse (1), so dass ein in dem Scherstabführungsbereich (16) eingelegter Scherstab (3) in die Kupplungsnut (26) eintreibbar ist.

9. System nach Anspruch 8, wobei die Vortriebsmittel (5) zumindest umfassen:
- einen an dem Scherstabgehäuse (1) fixierbaren Hydraulikzylinder (6), wobei der Hydraulikzylinder (6) mit dem Vortriebsblock (2) verbindbar ist, und
- ein Hydraulikaggregat (8) zum Betreiben des Hydraulikzylinders (6), wobei das Hydraulikaggregat (8) vorzugsweise über flexible Schläuche (10) mit dem Hydraulikzylinder (6) verbunden ist.

10. System nach wenigstens einem der vorhergehenden Ansprüche, wobei das Hydraulikaggregat (8) Fortbewegungsmittel (9), vorzugsweise in Form von Rollen, aufweist, so dass das Hydraulikaggregat (8) bewegbar ist.

11. System nach wenigstens einem der vorhergehenden Ansprüche 9 und 10, zusätzlich aufweisend eine mit dem Hydraulikzylinder (6) verbindbaren Ständer (13), so dass das in der Kupplungsnut (26) fixierte und mit dem Hydraulikzylinder (6) über die Verbindungsmittel (18) verbundene Scherstabgehäuse (1) vor dem Kupplungssystem in einer Eintreibposition haltbar ist.

12. System nach wenigstens einem der vorhergehenden Ansprüche, wobei das System modifizierte Scherstäbe (3) umfasst, wobei die modifizierten Scherstäbe (3) insbesondere eine der Länge des Scherstabführungsbereiches (16) entsprechende Länge aufweisen.

13. System nach Anspruch 12, wobei die modifizierten Scherstäbe (3) jeweils an einem Anfang und einem Ende frontseitig eine zentrale Scherstabbohrung (28) ausweisen, so dass mehrere modifizierte Scherstäbe (3) über Steckverbinder (12) verbindbar sind.

14. Verfahren zum Eintreiben von Scherstäben (3) in Kupplungssysteme zum Verbinden von Rohrelementen(23), aufweisend zumindest die folgenden Schritte:
A) Bereitstellung eines Systems nach wenigstens einem der Ansprüche 8 bis 13 an der Kupplungsnut (26) eines Kupplungssystems zum Verbinden von Rohrelementen (23), wobei das Scherstabgehäuse (1) durch die Befestigungsmittel (4) in der Kupplungsnut (26) fixiert wird, und wobei der Vortriebsblock (2) durch die Vortriebsmittel (5) in dem Scherstabgehäuse (1) angetrieben wird,
B) Positionierung mindestens eines Scherstabes (3) in dem Scherstabführungsbereich (16) des Scherstabgehäuses (1),
C) Eintreiben des Scherstabes (3) in die Kupplungsnut durch Betreiben der Vortriebsmittel (5).

15. Verwendung des Werkzeugsets nach wenigstens einem der Ansprüche 6 oder 7, zum Eintreiben von Scherstäben (3) in Kupplungssysteme zum Verbinden von Rohrelementen (23).
